# EUROPEAN PATENT SPECIFICATION

(11) **EP 4 244 492 B1**
(45) Date of publication and mention of the grant of the patent: **23.09.2026**
(21) Application number: 21892559.2
(22) Date of filing: 26.10.2021
(51) Int. Cl.: F16B 31/02, F16B 37/02, F16B 39/24, F16B 39/282, F16B 39/284, F16B 43/00

(54) **COUPLING FOR JOINING PIPE ELEMENTS**
KUPPLUNG ZUM VERBINDEN VON ROHRELEMENTEN
RACCORD POUR L'ASSEMBLAGE D'ÉLÉMENTS DE TUYAUTERIE

(30) Priority: 11.11.2020 US 202063112194 P
(43) Date of publication of application: 20.09.2023
(73) Proprietor: Victaulic Company, Easton, PA 18040-6714 (US)
(72) Inventor: BOWMAN, Matthew, A., Palmer, PA 18045 (US); MADARA, Scott, D., Nazareth, PA 18064 (US)
(74) Representative: Meissner Bolte Partnerschaft mbB
(86) International application number: PCT/US2021/056558
(87) International publication number: WO 2022/103571

(56) References cited:
- KR-A- 20060 006 111
- US-A- 3 212 387
- US-A- 3 225 809
- US-A- 3 481 381
- US-A- 5 161 836
- US-A- 6 105 951
- US-A1- 2015 336 019
- US-A1- 2016 102 792
- US-A1- 2017 082 136
- US-A1- 2017 130 758
- US-B2- 10 041 614

## Description

### Field of the Invention

This invention relates to a coupling for joining pipe elements in end to end relation, the coupling comprising surface features which engage rotating fastener elements.

### Background

The increased use of powered tools in the field, particularly impact wrenches, allows relatively large torques to be applied to fasteners with little physical effort on the part of the technician. This confluence of factors has the potential to result in an increase in the rate of bolts being over-torqued, in some cases severely so, leading to damage when those bolts are over-torqued by technicians with high-output impact wrenches. It is therefore thought advantageous if measures could be taken which increase a bolt's resistance to damage when powered tools are used. Such a fastener is known from KR 2006 0006111 A.

Furthermore, the document US 5161836 A discloses two clamp members formed to be fitted around the outer wall of a flexible sleeve when the ends of two pipes are located in the opening of the sleeve with adjacent edges of the two clamp members engaging each other in a clamped position for clamping the sleeve to the ends of the two pipes. Each of the clamp members has two spaced apart clamping ridges extending radially inward from its inner wall continuously between its two edges. The two clamping ridges of the two clamp members are located such that when the two clamp members are located around the outer wall of the sleeve and adjacent edges of the two clamp members engage each other, the two clamping ridges of the two clamp members form two spaced apart clamping ridges extending 360 degrees around the inside walls of the two clamp members for engaging the outside wall of the sleeve forming a seal between the sleeve and the ends of the two pipes when located in the opening of the sleeve. One of the clamp members has arcuate extensions extending from its two edges located and having widths such that the extensions will fit between the two clamping ridges of the other of the clamp members when the two clamp members are located in the clamped position. The clamp members are particularly useful with an industry approved gasket sleeve.

### Summary

The invention is disclosed in claim 1.

The following embodiments do not belong to the invention. The embodiment comprises, in combination, a platform in contact with a fastener element, the fastener element being rotatable about an axis oriented transversely to the platform. In an example embodiment the platform comprises a base surface. A plurality of raised surfaces project transversely to the base surface for contacting the fastener element. Each raised surface comprises a plateau. Each raised surface is separated from at least an adjacent one of the raised surfaces by a channel positioned therebetween.

By way of example, the fastener element may comprise a threaded nut or a head of a threaded bolt.

In a specific example design, each plateau has a height of 1,524 mm (0.060 inches) above the base surface, and in practical designs each plateau may have a height ranging from 0,508 mm (0.020 inches) to 2,54 mm (0.1 inches) above the base surface. Further by way of example, each plateau has a minimum surface area of 6,4516 mm² (0.010 square inches) and in practical designs, each plateau may have a surface area ranging from 6,4516 mm² (0.010 square inches) to 64,516 mm² (0.1 square inches). In certain examples, each plateau has a minimum surface area ranging from 12,9032 to 48,387 mm² (0.020 to 0.075 square inches).

In an example embodiment, at least one of the raised surfaces has a polygonal cross sectional shape. Further by way of example, at least one of the raised surfaces may have a round cross sectional shape. In a practical example embodiment, at least one of the raised surfaces is tapered, the at least one raised surface having a smaller perimeter at the plateau than at the base surface.

In an example embodiment the fastener element is softer than the plurality of raised surfaces. In a specific example, the fastener element may comprise steel and the plurality of raised surfaces may comprise ductile iron.

The following embodiment belongs to the invention and encompasses a coupling for joining pipe elements in end to end relation. In a particular example embodiment the coupling comprises a first segment having first and second ends oppositely disposed and a second segment having first and second ends oppositely disposed. A first fastener attaches the first end of the first segment to the first end of the second segment. A second fastener attaches the second end of the first segment to the second end of the second segment such that the segments surround a central space for receiving the pipe elements. First and second connection members are positioned respectively at each of the first and the second ends of each of the first and second segments. In an example embodiment, each connection member comprises a base surface oriented transversely to one of the fasteners. A plurality of raised surfaces project transversely to the base surface and are engageable with the one of the fasteners. Each raised surface comprises a plateau. Each raised surface is separated from at least an adjacent one of the raised surfaces by a channel positioned therebetween. By way of example, the fasteners may comprise a threaded nut engageable with one of the raised surfaces and/or a threaded bolt having a head engageable with one of the raised surfaces.

In a specific example design, each plateau has a height of 1,524 mm (0.060 inches) above the base surface, and in practical designs each plateau may have a height ranging from 0,508 mm (0.020 inches) to 2,54 mm (0.1 inches) above the base surface. Further by way of example, each plateau has a minimum surface area of 6,4516 mm² (0.010 square inches) and in practical designs, each plateau may have a surface area ranging from 6,4516 mm² (0.010 square inches) to 64,516 mm² (0.1 square inches). In certain examples, each plateau has a minimum surface area ranging from 12,9032 to 48,387 mm² (0.020 to 0.075 square inches).

In an example embodiment, at least one of the raised surfaces has a polygonal cross sectional shape. Further by way of example, at least one of the raised surfaces may have a round cross sectional shape. In a practical example embodiment, at least one of the raised surfaces is tapered, the at least one raised surface having a smaller perimeter at the plateau than at the base surface.

In an example embodiment the fastener is softer than the plurality of raised surfaces. In a specific example, the fastener may comprise steel and the plurality of raised surfaces may comprise ductile iron. In an example embodiment, the plurality of raised surfaces may be integrally cast with the coupling.

In an example embodiment a flange mountable on a pipe element comprises a ring having a contact face adapted to interface with a mating flange, and an exposed face arranged oppositely to the contact face. By way of example the exposed face comprises a base surface and a plurality of raised surfaces projecting transversely to the base surface. Each raised surface comprises a plateau, and each raised surface is separated from at least an adjacent one of the raised surfaces by a channel positioned therebetween. In a practical example the plurality of raised surfaces extend around the entire exposed face.

In a specific example design, each plateau has a height of 1,524 mm (0.060 inches) above the base surface, and in practical designs each plateau may have a height ranging from 0,508 mm (0.020 inches) to 2,54 mm (0.1 inches) above the base surface. Further by way of example, each plateau has a minimum surface area of 6,4516 mm² (0.010 square inches) and in practical designs, each plateau may have a surface area ranging from 6,4516 mm² (0.010 square inches) to 64,516 mm² (0.1 square inches). In certain examples, each plateau has a minimum surface area ranging from 12,9032 to 48,387 mm² (0.020 to 0.075 square inches).

In an example embodiment, at least one of the raised surfaces has a polygonal cross sectional shape. Further by way of example, at least one of the raised surfaces may have a round cross sectional shape. In a practical example embodiment, at least one of the raised surfaces is tapered, the at least one raised surface having a smaller perimeter at the plateau than at the base surface.

In an example embodiment the fastener is softer than the plurality of raised surfaces. In a specific example, the fastener may comprise steel and the plurality of raised surfaces may comprise ductile iron. In an example embodiment, the plurality of raised surfaces may be integrally cast with the flange.

In an example embodiment a flange coupling for joining pipe elements comprises a first ring having a first contact face and a first exposed face oppositely disposed, and a second ring having a second contact face and a second exposed face oppositely disposed. The second contact face interfaces with the first contact face. A plurality of fasteners extend though the first and second rings. Each of the fasteners comprises at least one rotatable member engaging at least one of the exposed faces of one of the rings. In an example embodiment the at least one exposed face comprises a base surface. A plurality of raised surfaces project transversely to the base surface. Each raised surface comprises a plateau. Each raised surface is separated from at least an adjacent one of the raised surfaces by a channel positioned therebetween.

In an example embodiment the plurality of raised surfaces extend around the entire exposed face. Further by way of example, at least one of the raised surfaces has a polygonal cross sectional shape or a round cross sectional shape. In an example embodiment at least one of the raised surfaces is tapered, the at least one raised surface having a smaller perimeter at the plateau than at the base surface. By way of example, the rotatable member may comprise a threaded nut engageable with at least one of the raised surfaces and /or a threaded bolt having a head engageable with one of the raised surfaces.

In an example embodiment the rotatable member is softer than the plurality of raised surfaces. In a specific example embodiment the fastener may comprise steel and the plurality of raised surfaces may comprise ductile iron. In a specific example embodiment the plurality of raised surfaces are integrally cast with the at least one exposed face.

### Brief Description of the Drawings

Figure 1 is an isometric view of an example combination platform and fastener element not falling under the invention;
Figure 1A is an isometric view of another example combination platform and fastener element not falling under the invention;
Figure 2 is an isometric view of a component of the example platform element shown in Figure 1;
Figure 3 is an isometric view of an example mechanical pipe coupling using a combination platform and fastener element according to the invention; and
Figure 4 is an isometric view of an example flanged coupling using a combination platform and fastener element not falling under the invention.

### Detailed Description

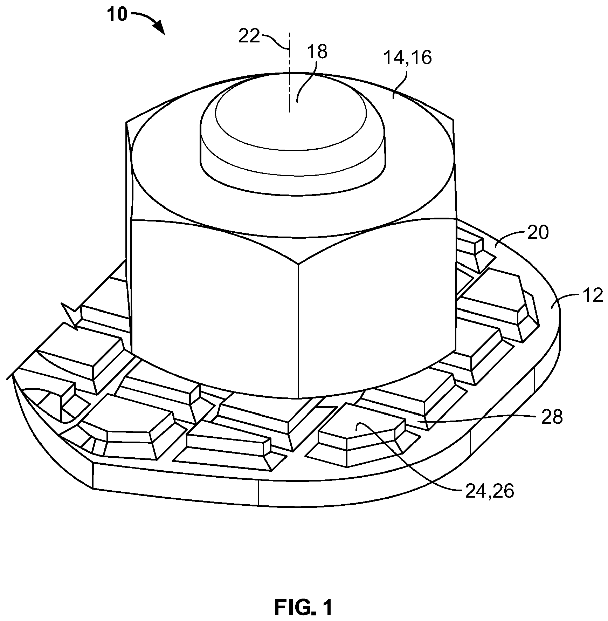

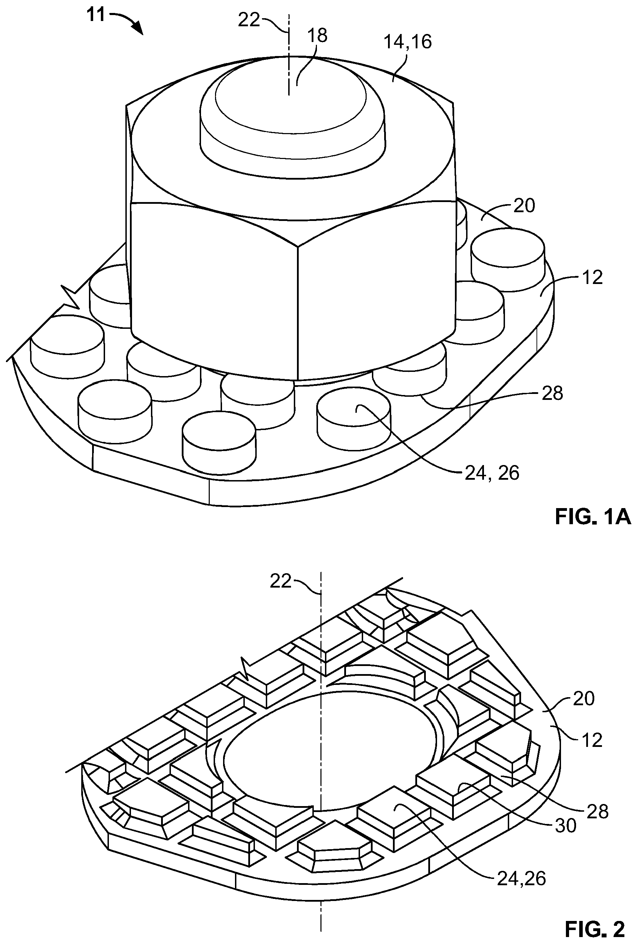

An example combination 10 is shown in Figure 1 and comprises a platform 12 in contact with a fastener element 14, in this example, a threaded nut 16 of a threaded bolt 18. Fastener element 14 could also comprise the head of the bolt 18 (not shown). As shown in isolation in Figure 2, an example platform comprises a base surface 20. Base surface 20 is oriented transversely to an axis 22 about which the fastener element is rotatable. A plurality of raised surfaces 24 project transversely to the base surface 20. The raised surfaces 24 comprise respective plateaus 26. Each raised surface 26 is separated from at least one adjacent raised surface by a respective channel 28 positioned therebetween. The raised surfaces 24 in this example have polygonal cross sectional shapes, but other shapes are also feasible, as shown in Figure 1A, wherein a practical example combination 11 of a platform 12 has raised surfaces 24 with plateaus 26 having round cross sectional shapes. As shown in Figure 2, raised surfaces 24 may be tapered such that each raised surface has a smaller perimeter 30 at the plateau 26 than at the base surface 20. A taper angle of about 3° is advantageous to provide draft when the platform manufactured by a casting process.

As shown in Figures 1 and 1A, raised surfaces 24 contact the fastener element 14. In this example, the nut 16 bears forcibly against the plateaus 26 as it is rotated relatively to the platform 12 about axis 22, tightening the nut on to the fixed bolt 18. It is well known that tensile stress in the bolt 18 increases as the nut 16 is tightened, and that the torque required to turn the nut also increases as the nut is tightened. However, it is observed that when the rotating nut 16 forcibly contacts the raised surfaces 24, the torque required to turn the nut increases at a greater rate compared to the increase in bolt stress that would otherwise occur in the absence of the raised surfaces. This observed phenomenon is actually advantageous because it may be used to protect the bolt from damage due to over-torqueing.

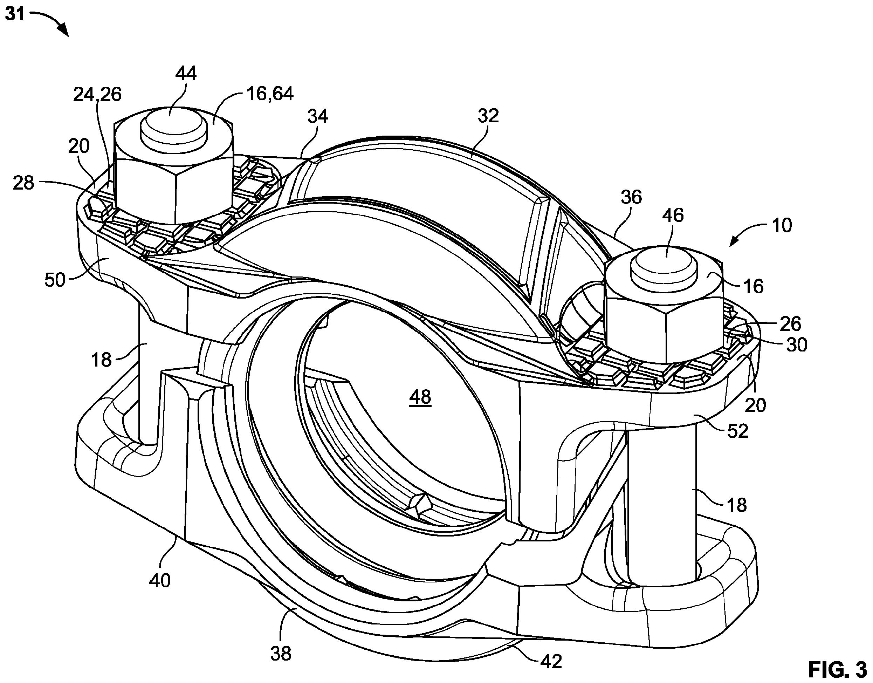

Figure 3 illustrates a practical implementation of the combination 10 on a coupling 31 according to the invention for joining pipe elements (not shown) in end to end relation. In this example the coupling 31 comprises a first segment 32 having respective first and second ends 34 and 36 oppositely disposed, and a second segment 38 having respective first and second ends 40 and 42 oppositely disposed. A first fastener 44 attaches the first end 34 of the first segment 32 to the first end 40 of the second segment 38. A second fastener 46 attaches the second end 36 of the first segment 32 to the second end 42 of the second segment 38 such that the segments 32 and 38 surround a central space 48 for receiving the pipe elements. In this example the fasteners 44 and 46 comprise mating nuts 16 and bolts 18.

First and second connection members 50 and 52 are positioned respectively at each of the first and the second ends (34, 36, 40, 42) of each of the first and second segments 32 and 38. In this example, each connection member 50, 52, comprises the above described base surface 20 oriented transversely to the respective fastener (44 or 46) which passes through the connection members. The raised surfaces 24 project transversely to each base surface 20 and are engageable with the fasteners 44 and 46. As described above with respect to combination 10, each raised surface 24 comprises a plateau 26, and each raised surface is separated from at least an adjacent one of the raised surfaces by a channel 28 positioned therebetween. Consistent with combination 10 described above and shown in Figure 1, the raised surfaces 24 in this example have polygonal cross sectional shapes and are tapered such that each raised surface has a smaller perimeter 30 at its plateau 26 than at its base surface 20. In this example it is the nuts 16 which engage and rotate against the plateaus 26 of the raised features 24 when the fasteners 44 and 46 are tightened, however, in other example embodiments it may be the heads of the bolts 18 which engage and rotate against the plateaus. Although combination 10 is depicted used with the coupling 31, the combination 11 of Figure 1A, having plateaus 26 with round cross sectional shapes, is also feasible in this implementation.

In a practical example of a coupling 31, significant disproportionate increase in torque compared with the associated increase in bolt stress was observed for plateaus 26 having a height of 1,524 mm (0.060 inches) above the base surface 20 and a minimum surface area of 6,4516 mm² (0.010 square inches), when used with a standard ASME B18.2.2 heavy hex nut of size ½", made of ASTM A563 carbon steel. For an effective design it is expected that plateau area will generally increase with increasing bearing area of the nut and or bolt, as fastener size increases. For this design, the phenomenon of disproportionate increase in torque was observed directly by increased felt torque when a hand wrench was used to tighten the coupling fasteners. In a test intended to induce bolt failure, when an impact wrench was used it was observed that the time to bolt failure increased by a factor of two when couplings employing the raised features according to the invention were tested against couplings not having the combination 10.

It is expected that effective designs of combinations 10 and 11 according to the invention may be achieved with plateaus 26 having a height above the base surface 20 ranging from 0,508 mm (0.020 inches) to 2,54 mm (0.1 inches), with heights of 1,524 mm (0.060 inches) expected to be advantageous. Practical designs may also have surface areas ranging from 6,4516 mm² (0.010 square inches) to 64,516 mm² (0.1 square inches), with surface areas ranging from 12,9032 to 48,387 mm² (0.020-0.075 square inches) expected to be advantageous. Effective protection of bolts ranging from 6,35 to 25,4 mm (0.25 inches to 1 inch) in diameter (as well as similar and equivalent metric sizes) is expected to be achieved using combinations such as 10 and 11 according to the invention.

In the example coupling 31, the fastener element 14 (the nut 16) was formed of carbon steel and has a lower surface hardness than the plurality of raised surfaces 24, which were integrally cast with the coupling and formed of ductile iron. It has been observed in the experimental coupling that as increasing torque is applied to the nuts 16, plateaus 26 have a sacrificial nature, and are worn down by nuts 16, with bolt stress increasing significantly after plateaus have been significantly worn down.

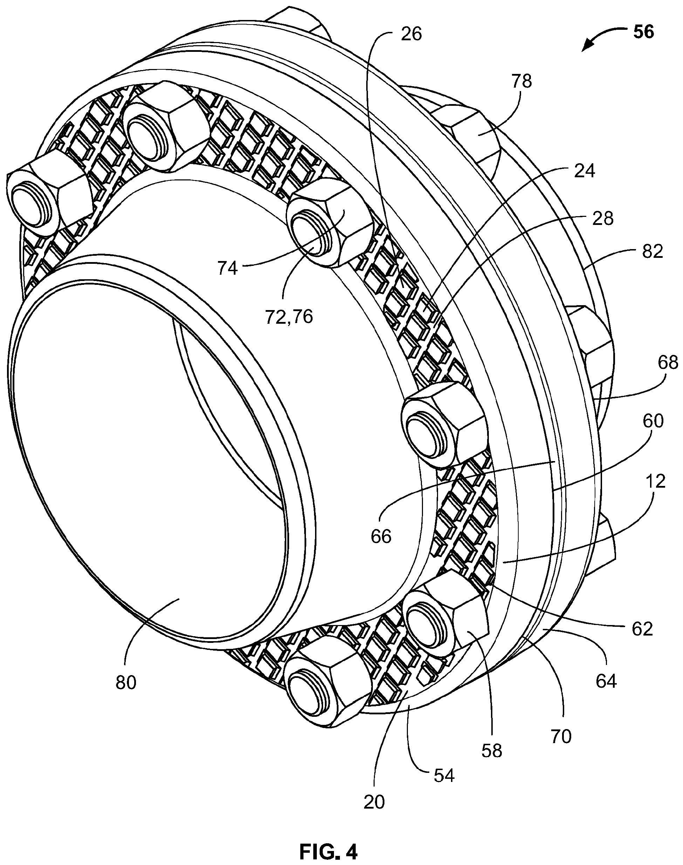

Figure 4 shows another practical embodiment wherein the combination platform 12 and fastener elements are used on a flange 54 of a flange coupling 56. In this example, the flange coupling 56 comprises flanges 54 taking the form of a first ring 58, having a first contact face 60 and a first exposed face 62 oppositely disposed, and a second ring 64 having a second contact face 66 and a second exposed face 68 oppositely disposed. The second contact face 66 interfaces with said first contact face 60. Typically, a seal 70 is captured between the contact faces 60 and 66 to ensure a fluid tight joint.

A plurality of fasteners 72 extend though the first and second rings 58 and 64. Each fastener 72 comprises at least one rotatable member engaging at least one of the exposed faces 62, 68 of one of the rings 58, 66. In a practical example the rotatable member may comprise a threaded nut 74 or a threaded bolt 76 having a head 78 and may engage both exposed faces 62 and 68.

The exposed faces of the flanges 54 comprise a base surface 20 and a plurality of raised surfaces 24 projecting transversely to the base surface 20 as described above for the platform 12 and the coupling 31. The raised surfaces 24 comprise respective plateaus 26. Each raised surface 26 is separated from at least one adjacent raised surface by a respective channel 28 positioned therebetween. The raised surfaces 24 in this example have polygonal cross sectional shapes, but other shapes, such as the round shapes of Figure 1A, are also feasible. Furthermore, it is advantageous if the raised surfaces 24 are tapered such that each raised surface has a smaller perimeter 30 at the plateau 26 than at the base surface 20. The raised surfaces 24 may have the same or similar height and area dimensions as described above. The raised surfaces may also comprise ductile iron and may be integrally cast with the flanges 54. As further described above, the fastener may be softer than the plurality of raised surfaces and may be formed of steel. Bolt stresses are expected to be limited until the plateaus are significantly worn down due to their sacrificial nature.

In the example shown in Figure 4 the flange coupling 56 may comprise first and second pipe stubs 80 and 82 to which the rings 58 and 64 are respectively attached. The stub pipes 80 and 82 may be welded to respective pipe elements (not shown) cut or fabricated to a desired length, or the rings 58 and 64 may be attached directly to pipe stock, by welding for example.

In the flange coupling 56 the rotatable elements (threaded nuts 74 and/or bolt heads 78) engage and rotate relatively to and forcibly against the plateaus 26 when the coupling 56 is assembled. It is expected that the bolts 76 will experience the phenomenon of disproportionate increase in torque required to tighten the nut 74 or bolt head 78 as compared with the increase in tensile stresses within the bolt 76 upon tightening. This effect is expected to protect the bolt 76 from damage due to over-torqueing for the flange coupling 56.

## Claims

1. A coupling (31) for joining pipe elements in end to end relation, said coupling (31) comprising:
a first segment (32) having first and second ends (34, 36) oppositely disposed, said first segment (32) comprising a first connection member (50) and a second connection member (52) positioned respectively at each of said first and second ends (34, 36);
a second segment (38) having first and second ends (40, 42) oppositely disposed, said second segment (38) comprising a first connection member (50) and a second connection member (52) positioned respectively at each of said first and second ends (40, 42);
a first fastener (44) attaching said first end (34) of said first segment (32) to said first end (40) of said second segment (38);
a second fastener (46) attaching said second end (36) of said first segment (32) to said second end (42) of said second segment (38) such that said first and second segments surround a central space (48) for receiving said pipe elements;
wherein each said connection member (50, 52) of said first and second connection members (34, 36, 40, 42) of said first segment (32) and said second segment (38) comprises:
a base surface (20) integral with said respective connection member (50, 52) and oriented transversely to one of said first and second fasteners (44,46);
a plurality of raised surfaces (24) extending transversely from said base surface (20), each said raised surface of said plurality of raised surfaces (24) comprising a plateau (26), wherein respective plateaus (26) of at least a first raised surface and a second raised surface of said plurality of raised surfaces (24) engage respective portions of respectively said first fastener (44) or said second fastener (46), each said raised surface of said plurality of raised surfaces (24) separated from at least an adjacent one of said plurality of raised surfaces (24) by a channel (28) positioned therebetween .

2. The coupling according to claim 1, wherein at least one of said first fastener (44) and said second fastener (46) comprises a threaded nut engageable with at least two of said plurality of raised surfaces.

3. The coupling according to claim 1, wherein at least one of said first fastener (44) and said second fastener (46) comprises a threaded bolt having a head engageable with at least two of said plurality of raised surfaces.

4. The coupling according to any of claims 1 to 3, wherein at least one of said fasteners (44, 46) is softer than said plurality of raised surfaces (24).

5. The coupling according to any of claims 1 to 4, wherein at least one of said fasteners (44, 46) comprises steel.

6. The coupling according to any of claims 1 to 4, wherein said plurality of raised surfaces comprise ductile iron.

7. The coupling according to claim 1, wherein said plurality of raised surfaces (24) are integrally cast with said coupling.

8. The coupling according to claim 1, wherein each said plateau has a height ranging from 0,508 mm (0.020 inches) to 2,54 mm (0.1 inches) above said base surface.

9. The coupling according to claim 1, wherein each said plateau has a height of 1,524 mm (0.060 inches) above said base surface.

10. The coupling according to claim 1, wherein each said plateau has a minimum surface area of 6,4516 mm² (0.010 square inches).

11. The coupling according to claim 1, wherein each said plateau has a surface area ranging from 6,4516 mm² (0.010 square inches) to 64,516 mm² (0.1 square inches).

12. The coupling according to claim 1, wherein at least one of said raised surfaces (24) has a polygonal cross sectional shape.

13. The coupling according to claim 1, wherein at least one of said raised surfaces (24) has a round cross sectional shape.

14. The coupling according to claim 1, wherein at least one of said raised surfaces (24) is tapered, said at least one raised surface having a smaller perimeter at said plateau than at said base surface.

## Patentansprüche

1. Kupplung (31) zum Verbinden von Rohrelementen in einer Stoßverbindungsbeziehung, wobei die Kupplung (31) umfasst:
ein erstes Segment (32), das ein erstes und ein zweites Ende (34, 36) aufweist, die einander entgegengesetzt angeordnet sind, wobei das erste Segment (32) ein erstes Verbindungselement (50) und ein zweites Verbindungselement (52) umfasst, die jeweils an jedem von dem ersten und dem zweiten Ende (34, 36) positioniert sind;
ein zweites Segment (38), das ein erstes und ein zweites Ende (40, 42) aufweist, die einander entgegengesetzt angeordnet sind, wobei das zweite Segment (38) ein erstes Verbindungselement (50) und ein zweites Verbindungselement (52) umfasst, die jeweils an jedem von dem ersten und dem zweiten Ende (40, 42) positioniert sind;
ein erstes Befestigungselement (44), mit dem das erste Ende (34) des ersten Segments (32) an dem ersten Ende (40) des zweiten Segments (38) befestigt ist;
ein zweites Befestigungselement (46), mit dem das zweite Ende (36) des ersten Segments (32) an dem zweiten Ende (42) des zweiten Segment (38) derart befestigt ist, dass das erste und das zweite Segment einen mittleren Raum (48) zum Aufnehmen der Rohrelemente umschließen;
wobei jedes Verbindungselement (50, 52) von dem ersten und dem zweiten Verbindungselement (34, 36, 40, 42) des ersten Segments (32) und des zweiten Segments (38) Folgendes umfasst:
eine Grundfläche (20), die einstückig mit dem entsprechenden Verbindungselement (50, 52) ist und quer zu einem von dem ersten und dem zweiten Befestigungselement (44, 46) ausgerichtet ist;
eine Vielzahl von erhöhten Flächen (24), die sich quer von der Grundfläche (20) erstrecken, wobei jede erhöhte Fläche von der Vielzahl von erhöhten Flächen (24) ein Plateau (26) umfasst, wobei jeweilige Plateaus (26) von mindestens einer ersten erhöhten Flächen und einer zweiten erhöhten Flächen der Vielzahl von erhöhten Flächen (24) mit entsprechenden Abschnitten von dem ersten Befestigungselement (44) beziehungsweise dem zweiten Befestigungselement (46) in Eingriff sind,
wobei jede erhöhte Fläche der Vielzahl von erhöhten Flächen (24) von mindestens einer benachbarten erhöhten Fläche der Vielzahl von erhöhten Flächen (24) durch einen dazwischen positionierten Kanal (28) getrennt ist.

2. Kupplung nach Anspruch 1, wobei mindestens eines von dem ersten Befestigungselement (44) und dem zweiten Befestigungselement (46) eine Gewindemutter umfasst, die mit mindestens zwei der Vielzahl von erhöhten Flächen in Eingriff gebracht werden kann.

3. Kupplung nach Anspruch 1, wobei mindestens eines von dem ersten Befestigungselement (44) und dem zweiten Befestigungselement (46) einen Gewindebolzen umfasst, der einen Kopf aufweist, der mit mindestens zwei der Vielzahl von erhöhten Flächen in Eingriff gebracht werden kann.

4. Kupplung nach einem der Ansprüche 1 bis 3, wobei mindestens eines der Befestigungselemente (44, 46) weicher als die Vielzahl von erhöhten Flächen (24) ist.

5. Kupplung nach einem der Ansprüche 1 bis 4, wobei mindestens eines der Befestigungselemente (44, 46) Stahl umfasst.

6. Kupplung nach einem der Ansprüche 1 bis 4, wobei die Vielzahl von erhöhten Flächen Sphäroguss umfasst.

7. Kupplung nach Anspruch 1, wobei die Vielzahl von erhöhten Flächen (24) einstückig mit der Kupplung gegossen sind.

8. Kupplung nach Anspruch 1, wobei jedes Plateau eine Höhe im Bereich von 0,508 mm (0,020 Zoll) bis 2,54 mm (0,1 Zoll) über der Grundfläche aufweist.

9. Kupplung nach Anspruch 1, wobei jedes Plateau eine Höhe von 1,524 mm (0,060 Zoll) über der Grundfläche aufweist.

10. Kupplung nach Anspruch 1, wobei jedes Plateau einen Mindestflächeninhalt von 6,4516 mm² (0,010 Quadratzoll) aufweist.

11. Kupplung nach Anspruch 1, wobei jedes Plateau einen Flächeninhalt im Bereich von 6,4516 mm² (0,010 Quadratzoll) bis 64,516 mm² (0,1 Quadratzoll) aufweist.

12. Kupplung nach Anspruch 1, wobei mindestens eine der erhöhten Flächen (24) eine vieleckige Querschnittsform aufweist.

13. Kupplung nach Anspruch 1, wobei mindestens eine der erhöhten Flächen (24) eine runde Querschnittsform aufweist.

14. Kupplung nach Anspruch 1, wobei sich mindestens eine der erhöhten Flächen (24) verjüngt, wobei die mindestens eine erhöhte Fläche am Plateau einen kleineren Umfang hat als an der Grundfläche.

## Revendications

1. Raccord (31) destiné à assembler des éléments de tuyau dans une relation bout à bout, ledit raccord (31) comprenant :
un premier segment (32) présentant des première et seconde extrémités (34, 36) disposées de manière opposée, ledit premier segment (32) comprenant un premier élément de liaison (50) et un second élément de liaison (52) positionnés respectivement au niveau de chacune desdites première et seconde extrémités (34, 36) ;
un second segment (38) présentant des première et seconde extrémités (40, 42) disposées de manière opposée, ledit second segment (38) comprenant un premier élément de liaison (50) et un second élément de liaison (52) positionnés respectivement au niveau de chacune desdites première et seconde extrémités (40, 42) ;
un premier élément de fixation (44) attachant ladite première extrémité (34) dudit premier segment (32) à ladite première extrémité (40) dudit second segment (38) ;
un second élément de fixation (46) attachant ladite seconde extrémité (36) dudit premier segment (32) à ladite seconde extrémité (42) dudit second segment (38) de telle sorte que lesdits premier et second segments entourent un espace central (48) destiné à recevoir lesdits éléments de tuyau ;
chacun dit élément de liaison (50, 52) desdits premier et second éléments de liaison (34, 36, 40, 42) dudit premier segment (32) et dudit second segment (38) comprenant :
une surface de base (20) d'un seul tenant avec ledit élément de liaison (50, 52) respectif et orientée transversalement par rapport à l'un desdits premier et second éléments de fixation (44, 46) ;
une pluralité de surfaces surélevées (24) s'étendant transversalement à partir de ladite surface de base (20), chaque dite surface surélevée de ladite pluralité de surfaces surélevées (24) comprenant un plateau (26), des plateaux (26) respectifs d'au moins une première surface surélevée et une seconde surface surélevée de ladite pluralité de surfaces surélevées (24) venant en prise avec des parties respectives, respectivement dudit premier élément de fixation (44) ou dudit second élément de fixation (46),
chaque dite surface surélevée de ladite pluralité de surfaces surélevées (24) étant séparée d'au moins une surface adjacente de ladite pluralité de surfaces surélevées (24) par un canal (28) positionné entre elles.

2. Raccord selon la revendication 1, au moins un élément parmi ledit premier élément de fixation (44) et ledit second élément de fixation (46) comprenant un écrou fileté pouvant venir en prise avec au moins deux surfaces de ladite pluralité de surfaces surélevées.

3. Raccord selon la revendication 1, au moins un élément parmi ledit premier élément de fixation (44) et ledit second élément de fixation (46) comprenant un boulon fileté présentant une tête pouvant venir en prise avec au moins deux surfaces de ladite pluralité de surfaces surélevées.

4. Raccord selon l'une quelconque des revendications 1 à 3, au moins l'un desdits éléments de fixation (44, 46) étant plus mou que ladite pluralité de surfaces surélevées (24).

5. Raccord selon l'une quelconque des revendications 1 à 4, au moins l'un desdits éléments de fixation (44, 46) comprenant de l'acier.

6. Raccord selon l'une quelconque des revendications 1 à 4, ladite pluralité de surfaces surélevées comprenant du fer ductile.

7. Raccord selon la revendication 1, ladite pluralité de surfaces surélevées (24) étant coulées d'un seul tenant avec ledit raccord.

8. Raccord selon la revendication 1, chaque dit plateau présentant une hauteur située dans la plage de 0,508 mm (0,020 pouce) à 2,54 mm (0,1 pouce) au-dessus de ladite surface de base.

9. Raccord selon la revendication 1, chaque dit plateau présentant une hauteur de 1,524 mm (0.060 pouce) au-dessus de ladite surface de base.

10. Raccord selon la revendication 1, chaque dit plateau présentant une aire surfacique minimale de 6,4516 mm² (0,010 pouce carré).

11. Raccord selon la revendication 1, chaque dit plateau présentant une aire surfacique située dans la plage de 6,4516 mm² (0,010 pouce carré) à 64,516 mm² (0,1 pouce carré).

12. Raccord selon la revendication 1, au moins l'une desdites surfaces surélevées (24) présentant une forme de section transversale polygonale.

13. Raccord selon la revendication 1, au moins l'une desdites surfaces surélevées (24) présentant une forme de section transversale ronde.

14. Raccord selon la revendication 1, au moins l'une desdites surfaces surélevées (24) étant effilée, ladite au moins une surface surélevée présentant un périmètre plus petit au niveau dudit plateau qu'au niveau de ladite surface de base.
